# EUROPÄISCHE PATENTANMELDUNG

(11) **EP 0 583 494 A1**
(43) Veröffentlichungstag der Anmeldung: **23.02.1994**
(21) Anmeldenummer: 92113915.0
(22) Anmeldetag: 14.08.1992
(51) Int. Cl.: G05B 19/417

(54) **Verfahren und Vorrichtung zur Schleppfehlerkompensation zwischen einer Fördervorrichtung und einer relativ zu dieser bewegten, numerisch gesteuerten Maschine**

(71) Anmelder: SIEMENS AKTIENGESELLSCHAFT, D-80333 München (DE)
(72) Erfinder: Hoos, Gerd, Dipl.-Ing., W-8520 Erlangen (DE)

(57) **Zusammenfassung**

Zur Schleppfehlerkompensation zwischen einem Roboter (R) und einem Förderband (C) wird in einem Regelkreis (RK) ein Lagesollwert (delta X_{S}) erzeugt, durch den die Bewegung des Förderbandes in der Robotersteuerung (RC) berücksichtigt wird. Im Rückkopplungszweig des Regelkreises (RK) ist erfindungsgemäß ein Filter (F2) mit vorgebbarer Zeitkonstante (T) vorgesehen, mit dem die Zeitverzögerung (t_{V}), die der Lagesollwert (delta X_{S}) durch die Robotersteuerung (RC) erfährt, kompensiert wird.

## Beschreibung

Bei der Bearbeitung von auf oder an einer Fördervorrichtung transportierten Gegenständen durch eine numerisch gesteuerte Maschine, beispielsweise einen Roboter, muß der vom Förderband zurückgelegte Weg in die Bahnplanung der Roboterbewegung einbezogen werden. Durch die Zeitverzögerungen der dazu benötigten Regelkreise inklusive der Robotersteuerung ergibt sich ein Schleppfehler zwischen den Soll- und Istpositionen der Werkzeugspitze des Roboters relativ zum Förderband. Zur Kompensation dieses Schleppfehlers kann ein Regelkreis verwendet werden, bei dem ein aus den Ist- und Sollgrößen nachgebildeter Schleppfehler zum Lagesollwert der Fördervorrichtung addiert wird. Die so gebildete neue Sollgröße wird an die Robotersteuerung ausgegeben, in deren Interpolator in die kartesischen Roboterkoordinaten eingerechnet und in achsspezifische Koordinaten transformiert. Bevor die achsspezifischen Werte an den Lageregler und von diesem an die Antriebssteuerung des Roboters weitergegeben werden, werden diese über einen Filter geglättet. Die Interpolation, Transformation, Filterung und Lageregelung ist aber mit Zeitverzögerungen verbunden, die dem vom vorgeschalteten Regelkreis erzeugten Lagesollwert des Förderbandes verzögern und somit wiederum zu einem Schleppfehler führen.

Aufgabe der Erfindung ist es, den Schleppfehler zwischen einer numerisch gesteuerten Maschine, die relativ zu einem Förderband bewegt wird, zu kompensieren.

Diese Aufgabe wird durch die Merkmale der Patentansprüche gelöst.

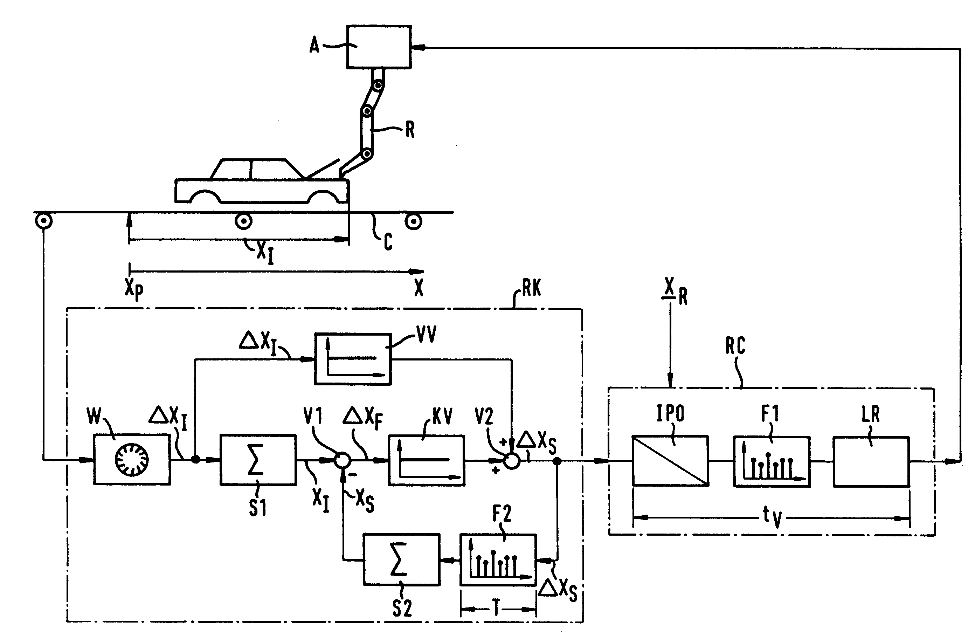

Die Figur zeigt einen Signalflußplan eines Regelkreises RK zur Kompensation des Schleppfehlers zwischen einem Förderband C und einem Roboter R. Die Richtung des jeweiligen Signalflusses ist durch Pfeile angedeutet. Zur Kennzeichnung der wirkungsmäßigen Abhängigkeit eines jeweiligen Ausgangssignals vom Eingangssignal ist in die Blöcke des Signalflußplans die jeweilige Übergangsfunktion oder ein anderes Funktionssymbol eingezeichnet.

Die Regelstrecke des Regelkreises RK besteht aus einer Wegmeßeinrichtung W für das Förderband C, die als Drehgeber ausgeführt sein kann, einem Summierglied S1, einem Vergleicher V1, einem Proportionalglied KV und einem Vergleicher V2. Vom Eingang des Summiergliedes S1 zum Vergleicher V2 ist ein weiteres Proportionalglied als Geschwindigkeitsvorsteuerung VV geschaltet. Im Rückkopplungszweig vom Ausgang des Vergleichers V2 zum Vergleicher V1 liegen in Serie ein Mittelwertfilter F2 und ein weiteres Summierglied S2.

Der Ausgang des Regelkreises RK ist auf den Eingang der Robotersteuerung RC geführt, von der hier der Interpolator IPO, ein erstes Mittelwertfilter F1 und der Lageregler LR gezeigt sind. Der Ausgang der Robotersteuerung RC führt auf den Eingang der Antriebseinheit A des schematisch dargestellten Roboters R.

Die Wirkungsweise der Regelung ist wie folgt: Ab dem Synchronisationspunkt X_{P} des Transportbandes C wird der Weggeber W gestartet und die inkrementellen Wegstrecken delta X_{I} die das Transportband C zurücklegt, werden an das Summierglied S1 gegeben. Die inkrementellen Wegstrecken delta X_{I} werden aufsummiert, so daß am Ausgang des Summiergliedes der gesamte ab dem Synchronisationspunkt X_{P} zurückgelegte Weg X_{I} des Förderbandes C anliegt. Am Vergleicher V1 wird die Differenz zwischen dem Istweg X_{I} und dem Sollweg X_{S}, der im Rückkopplungsweg über das Summierglied S2 erzeugt wird, gebildet und als Schleppfehler delta X_{F} über das Proportionalglied KV an den Eingang des Vergleichers V2 gegeben.

Zur Erzielung eines optimalen Einschwingverhaltens wird der inkrementelle Wegistwert delta X_{I} über das als Geschwindigkeitsvorsteuerung wirkende Proportionalglied VV an den Vergleicher V2 gegeben und direkt auf den verstärkten inkrementellen Schleppfehler delta X_{F} addiert. Mit dieser Geschwindigkeitsvorsteuerung ergibt sich während des Einschwingvorgangs am Vergleicher V1 eine große Regeldifferenz, so daß die Sollwertvorgabe delta X_{S} für die Robotersteuerung zunächst relativ groß ist. Dadurch wird ein sehr schnelles und weitgehend überschwingungsfreies Anlaufverhalten der Roboterantriebe erreicht.

Bevor auf das erfindungsgemäße Mittelwertfilter F2 im Rückkopplungszweig des Regelkreises RK eingegangen wird, wird zunächst die Robotersteuerung RC beschrieben. Die am Ausgang des Vergleichers V2 anliegende Wegsollgröße delta X_{S} wird auf den Eingang des Interpolators IPO der Robotersteuerung RC gegeben. Im Interpolator IPO wird diese kartesische Weggröße delta X_{S} in X-Richtung in die kartesischen Koordinaten X_{R} des Roboters einbezogen und in die achsspezifischen Roboterkoordinaten in bekannter Weise transformiert. Über einen hier nicht gezeigten Feininterpolator und das Filter F erfolgt zur Vermeidung von Sprüngen eine Glättung der achsspezifischen Sollwerte, die dann an den Lageregler LR und von diesem an die Antriebseinheit A des Roboters R als neue Sollpositionen ausgegeben werden. Durch die Transformation im Interpolator IPO, die Filterung im Mittelwertfilter F1 und die Lageregelung im Lageregler LR erfährt der auf den Eingang der Robotersteuerung RC gegebene Lagesollwert delta X_{S} eine Verzögerung um die Zeit tᵥ, so daß sich dadurch ein weiterer Schleppfehler zwischen dem Roboter R und dem Transportband C ergibt.

Um diesen Schleppfehler zu kompensieren, wird in den Rückkopplungszweig vom Ausgang des Vergleichers V2 zum Vergleicher V1 in Serie zum Summierglied S2 ein zweites Mittelwertfilter F2 geschaltet, dessen Zeitkonstante T frei wählbar ist, so daß mit diesem zweiten Filter F2 die Zeitverzögerung tᵥ der Robotersteuerung RC nachgebildet werden kann. Damit wird im Rückkopplungszweig ein Wegsollwert X_{S} gebildet und auf den Vergleicher V2 gegeben, der um die Zeit T dem eigentlichen Wegsollwert nacheilt. Am Ausgang des Vergleichers V1 wird daher eine größere Regeldifferenz delta X_{F} zwischen dem Wegistwert X_{I}, und dem Wegsollwert X_{S} entstehen, so daß der am Ausgang des Vergleichers V2 anliegende inkrementelle Wegsollwert delta X_{S} ebenfalls einen größeren Wert annimmt, der den durch die Zeitverzögerung tᵥ der Robotersteuerung RC bedingten Schleppfehler kompensiert. Durch geeignete Wahl der Zeitkonstante T des Mittelwertfilters F2 kann der Schleppfehler zwischen dem Transportband C und dem Roboter R nahezu vollständig kompensiert werden. Im eingeschwungenen Zustand erfolgt die Nachführung des Roboters wesentlich über die Geschwindigkeitsvorsteuerung VV.

Anstelle der Proportinalglieder KV und VV können selbstverständlich auch Regelglieder höherer Ordnung verwendet werden.

## Patentansprüche

1. Verfahren zur Schleppfehlerkompensation zwischen einer Fördervorrichtung (C) und einer relativ zu dieser bewegten numerisch gesteuerten Maschine (R), wobei
1.1 aus dem von der Fördervorrichtung (C) zurückgelegten Lageistwert (delta X_{I}) über einen Regelkreis (RK) ein Lagesollwert (delta X_{S}) erzeugt und in die kartesischen Roboterkoordinaten (X_{R}) eingerechnet wird,
1.2 der Lagesollwert (delta X_{S}) aus der Summe eines Schleppfehlers (delta X_{F}) und dem Lageistwert (delta X_{I}) gebildet wird,
1.3 sich der Schleppfehler (delta X_{F}) ergibt aus der Differenz des von der Fördervorrichtung (C) ab einem Synchronisationspunkt (X_{P}) zurückgelegten Weges (X_{I}) und der Summe der ab dem Synchronisationspunkt (X_{P}) erzeugten und gefilterten Lagesollwerte,
1.4 die Filterlänge (T) des Filters (F2) für die Lagesollwerte (delta X_{S}) vorgebbar ist und im Bereich der durch die Robotersteuerung (RC) verursachten Zeitverzögerung (t_{V}) liegt.

2. Vorrichtung zur Schleppfehlerkompensation zwischen einer Fördervorrichtung (C) und einer relativ zu dieser bewegten numerisch gesteuerten Maschine (R) mit
2.1 einem Regelkreis (RK), dessen Regelstrecke aus einem Weggeber (W), einem ersten Summierglied (S1) und einem ersten Regelglied (KV) besteht, wobei ein zweites Regelglied (VV) parallel zum ersten Summierglied (S1) und zum ersten Regelglied (KV) geschaltet ist,
2.2 einem parallel zum ersten Regelglied (KV) liegenden Rückkopplungszweig mit einem Filter mit einstellbarer Zeitkonstante (T) und einem zweiten Summierglied (S2),
2.3 einer an den Ausgang des Regelkreises angeschlossenen Robotersteuerung (RC).
